# EUROPEAN PATENT SPECIFICATION

(11) **EP 1 402 511 B1**
(45) Date of publication and mention of the grant of the patent: **29.11.2006**
(21) Application number: 02733142.0
(22) Date of filing: 05.06.2002
(51) Int. Cl.: G09G 3/34, H05B 41/28

(54) **INVERTER FOR LIQUID CRYSTAL DISPLAY, AND POWER SUPPLY ARRANGEMENT COMPRISING SUCH AN INVERTER**
WECHSELRICHTER FÜR EINE FLÜSSIGKRISTALLANZEIGE, UND STROMVERSORGUNG MIT EINEM SOLCHEN WECHSELRICHTER
INVERSEUR POUR AFFICHEUR A CRISTAUX LIQUIDES ET DISPOSITIF D'ALIMENTATION EN PUISSANCE COMPRENANT UN TEL INVERSEUR

(30) Priority: 14.06.2001 EP 01202295
(43) Date of publication of application: 31.03.2004
(73) Proprietor: Koninklijke Philips Electronics N.V., 5621 BA Eindhoven (NL)
(72) Inventor: HAUS, Thomas A. J., NL-5656 AA Eindhoven (NL); DE GROOT, Hendrik W. J., NL-5656 AA Eindhoven (NL)
(74) Representative: van der Veer, Johannis Leendert
(86) International application number: PCT/IB2002/002061
(87) International publication number: WO 2002/103665

(56) References cited:
- EP-A- 0 413 991
- US-A- 4 865 425
- US-A- 5 126 637
- US-A- 5 384 516
- PATENT ABSTRACTS OF JAPAN vol. 017, no. 168 (M-1391), 31 March 1993 (1993-03-31) & JP 04 328031 A (SONY CORP), 17 November 1992 (1992-11-17)

## Description

The present invention relates to an inverter for use in a liquid crystal display unit. The invention also relates to an arrangement for power supply of a plurality of back or edge illumination devices in a liquid crystal display unit, comprising a mains connection, a power converter, and at least one inverter.

A power supply for discharge lamps in a liquid display device is known from e.g. US 4,865,425. In such a power supply, there is for each lamp provided an inverter, comprising an oscillator and a step-up transformer to generate a sufficient voltage to ignite the lamp.

Conventional liquid display devices have a mains-isolated power supply located in the pedestal of the monitor, where there is sufficient space, or in a separate adapter. From this power supply, a lower voltage (e.g. 12 V DC) is supplied to the screen portion, where a plurality of inverters are arranged. Each inverter transforms the lower DC voltage to an appropriate level (e.g. 3 kV) needed for igniting the lamps.

In order to fulfill the safety requirements related to current limitations, conventional inverter transformers have a limited power output around 10W. Therefore, each inverter only drives one or two lamps.

Even though safety regulations would allow an increase in power by having the power supply deliver up to 47 V DC, this would only lead to a minor power increase and mostly be wasted as losses in the inverters.

As clear from the above, the mains voltage first must be transformed down to 12 V, and then transformed up to the required voltage in the inverters. This is an inefficient procedure. Further, several inverters are required for driving the lamps, typically four inverters for driving eight lamps.
A power supply for discharge lamps, receiving an AC mains voltage and providing a high DC voltage without intermediate down-transformation is disclosed in US 5,126,637. It is an object of the invention to provide an improved power supply arrangement in an LCD.

According to the invention, these and other objects are achieved by a power supply arrangement for supplying power to a plurality of back illumination devices in a liquid crystal display, wherein the power converter is arranged to convert an AC voltage input to a DC voltage output, the inverter is connected to said DC voltage output and is arranged to convert said output to a voltage level adequate for driving said illumination devices, and the inverter is provided with mains isolation.

By using this arrangement a conventional adapter can be dispensed with and the LCD can be connected directly to the mains. The conversion down to a low DC voltage is eliminated without violating the current-limitation safety requirements. This leads to a more effective power supply.

Another advantage is that a larger power output can be delivered by the inverter, also without violating the current-limitation safety requirements. As a consequence, only one inverter is required for driving several, at least four, back illumination devices. This reduces the complexity and the cost of each LCD.

The LCD unit typically comprises also a circuit power supply, which is connected to said power converter output, and arranged to generate voltage levels required by control circuitry in the LCD. This circuit power supply is preferably also provided with mains isolation, so that the entire LCD is isolated from the mains. In comparison with a conventional LCD power supply, the mains isolation normally present in the adapter has been divided and moved forward to the inverter and the circuit power supply, respectively.

According to a preferred embodiment, the power converter and the inverter are arranged in a screen portion of the LCD. This leads to a very practical and efficient design, where the mains is simply connected to the screen portion of the LCD. Thus, no connection wires are required in the moving joint between the pedestal and the screen.

The power converter output preferably has a voltage level that it higher than the voltage level of the AC input, and that ranges for example from 200-600 V. This voltage level makes it possible to generate the power required for driving several, for example eight, lamps, without excessive power losses.

The power converter can be a PFC circuit

A second aspect of the present invention relates to an inverter for use in a LCD, provided with mains isolation means. It is noted that this concept is novel in LCD power supply, and that it enables a more cost effective and power effective power supply arrangement.

These and other aspects of the invention will be apparent from the preferred embodiments more clearly described with reference to the appended drawings.
Fig. 1 is a schematic view of a power supply arrangement in an LCD unit according to an embodiment of the invention.
Fig. 2a-c show various perspective views of the inverter in fig. 1.
Fig. 3 is a schematic sectional view of the coil former of the inverter in fig. 2.
Fig. 4a-b show examples of LLC and LLCC circuits.

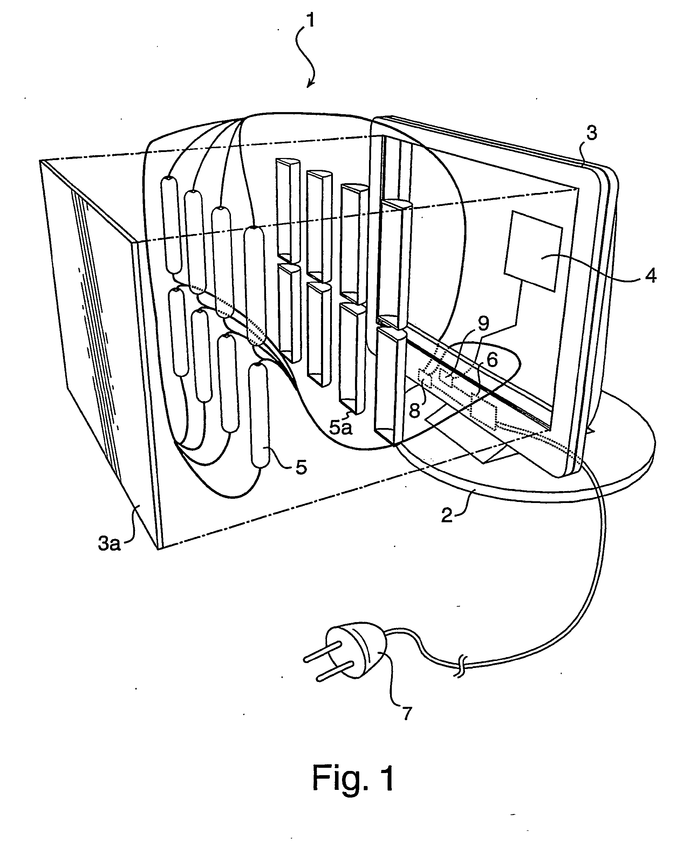

Fig. 1 shows a schematic view of a power supply arrangement in a LCD unit according to an embodiment of the invention. The LCD unit 1 has a pedestal portion 2 and a screen portion 3 in which the liquid crystal display 3a is housed together with its control electronics 4. The screen portion also contains a number of background illumination devices in the form of lamps 5 with reflectors 5a. A power converter in the form of a power factor correction (PFC) circuit 6 is arranged in the lower part of the screen portion 3, and is connected to the mains 7, normally 90 - 250 V AC, in the illustrated example 230 V AC. The PFC circuit 6 delivers a 400 V DC, and comprises no mains isolation.

The DC output is supplied to an inverter 8, also arranged in the screen portion 3. The inverter 8 is adapted to convert the PFC DC output to a voltage more suitable for driving the lamps 5, typically around 3 kV. The DC voltage from the PFC is also supplied to a conventional low-voltage transformer 9 that is adapted to generate voltages required by the control electronics 4 of the LCD, typically 3V, 5V and 12V.

The inverter 8 and the power transformer 9 are both provided with mains isolation, thereby satisfying the safety requirements for the LCD. While this is straightforward in the case of the conventional low voltage transformer 9, it is more complicated in the case of the inverter 8.

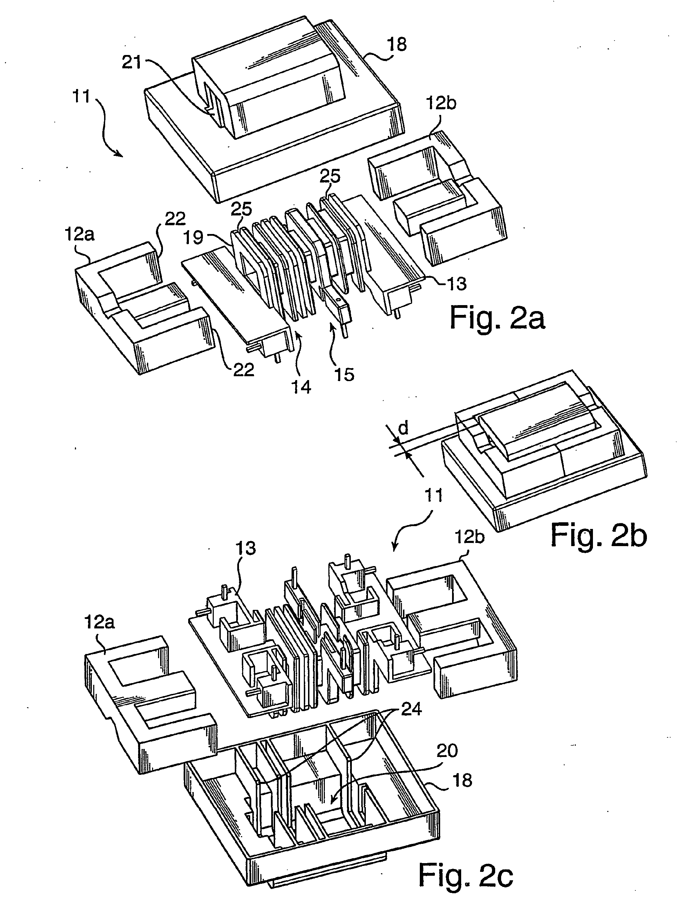

The transformer section 11 of the inverter 8 is shown in figs. 2-3, and comprises a core consisting of two E-shaped parts 12a and 12b, and a coil former 13 for forming compartments 14, 15 for the primary and secondary coil windings (the winding turns are not shown).

In order to avoid problems caused by breakdown and corona, in spite of the limited space available in the transformer 11, the coil former 13 is formed with flanges or flares 16 dividing the secondary winding compartment into several sections. On each side of the windings, the separating flanges are double, forming so called labyrinths 17.

Furthermore, the secondary sections have varying wall thicknesses towards the core 12a, 12b, in order to avoid corona and breakdown problems between the secondary winding and the core.

In the example illustrated in fig. 2-3, there are three secondary sections 15a-15c. The material thickness b in each section increases with the distance from the primary winding, the first section having a wall thickness of 0.7 mm, the second section having a wall thickness of 1.5 mm and the third section having a thickness of 2.1 mm. This means that a decreasing number of layers can be housed in each section; 22 layers in the first section, 17 layers in the second and 12 in the third section. The width a of the sections 15a-c can nevertheless be equal, so that each layer in each section contains an equal number of turns, in the preferred embodiment 19 turns. The inverter in fig. 2-3 has a primary winding with 110 turns, and a secondary winding with almost 1000 turns divided among the three sections.

The design described herein eliminates the need for filling the inverter with resin or the need to use insulating tape, thus saving costs.

Before the core 12a, 12b is inserted into the corresponding opening of the coil former 13, the coil former 13 is placed in a casing 18. The portion 19 of the coil former 13 intended to receive the core is arranged in a groove 20 of the casing, said groove having openings 21 on either side. The core parts 12a, 12b are then inserted into the coil former 13 through these openings 21, thereby fixing the coil former 13 and the casing 18 together. Note that the outer sections 22 of the core 12a, 12b are separated from the sides of the casing 18 by a small distance d, preferably 1-2 mm. This distance further reduces corona problems.

Flanges 24 along the sides of the groove 20 in the casing 18 are adapted to be received by grooves 25 formed in the above-mentioned labyrinths 17 in the side of the coil former 13.

The inverter in accordance with the design illustrated herein generates an output voltage on the secondary side of around 2,5 kV when the input voltage on the primary side is 250 V.

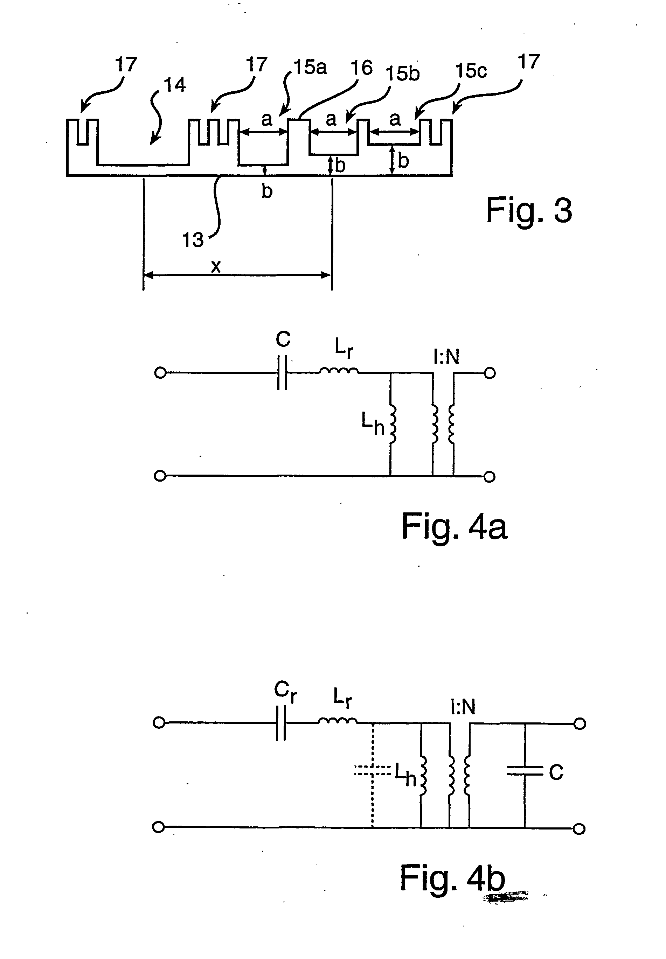

Apart from the transformer functionality, the inverter constitutes a LLC or a LLCC circuit, such as illustrated in figs. 4a and 4b. The spread between the primary and secondary windings is preferably selected so that the self-inductance can function as a substitute for a ballast coil in the LLC or LLCC circuit.

In the transformer illustrated in figs. 2-3, the distance X between the centers of the primary and the secondary windings is in approximately 2 cm in order to accomplish the desired spread.

A number of modifications of the described embodiments are possible within the scope of the appended claims. For example, the details regarding the inverter design, such as wall thickness, number of flares, number of primary and/or secondary winding sections etc., may be modified by persons skilled in the art.

It should be understood that by increasing the winding compartments and the core, and increasing the number of windings, a larger power can be taken from the inverter.

## Claims

1. A power supply for a plurality of back and/or edge illumination devices (5) in a liquid crystal display unit (1), comprising:
a mains connection (7),
a power converter (6), arranged to convert an AC voltage input to a DC voltage output,
at least one inverter (8) connected to said DC voltage output, arranged to transform said output into a voltage level adequate for driving said illumination devices (5),
**characterized in that** said inverter has a transformer section (11) including a core (12a, 12b) and a coil former (13) forming coaxial compartments (14, 15) for a primary and a secondary coil winding, said coil former being formed with flanges (16) separating the secondary winding compartment (15) into several sections, thereby ensuring mains isolation, and wherein the inner wall thickness (b) of each secondary winding section increases with the distance from the primary winding (14).

2. A power supply according to claim 1, wherein the core comprises two E-shaped parts (12a, 12b), the central legs of which are adapted to be inserted into the coil former (13).

3. A power supply according to any one of the preceding claims, wherein the flanges on each side of the compartments (14, 15) are double.

4. A power supply according to any one of the preceding claims, further comprising a power transformer (9), connected to said power converter (6), and arranged to generate voltage levels required by circuitry (4) in the LCD, said power transformer (9) also being provided with mains isolation.

5. A power supply according to any one of the preceding claims, wherein said power converter output has a voltage level greater than the voltage level of the AC input.

6. A power supply according to any one of the preceding claims, wherein said power converter output has a voltage in the range 200V - 600 V.

7. An LCD unit (1) comprising a power supply according to any one of the preceding claims.

## Patentansprüche

1. Stromversorgung für mehrere Hintergrundbeleuchtungs- und/oder Randausleuchtungseinrichtungen (5) in einer Flüssigkristallanzeigeeinheit (1) mit:
- einem Netzanschluss (7),
- einem Leistungswandler (6), welcher so vorgesehen ist, dass er eine Eingangswechselspannung in eine Ausgangsgleichspannung umwandelt,
- mindestens einem, mit der Ausgangsgleichspannung verbundenen Wechselrichter (8), welcher so angeordnet ist, dass er die Ausgangsspannung in einen Spannungspegel umwandelt, welcher zur Steuerung der Beleuchtungseinrichtungen (5) geeignet ist,
**dadurch gekennzeichnet, dass** der Wechselrichter einen Transformatorteil (11) mit einem Kern (12a, 12b) und einem Spulenkörper (13) aufweist, um koaxiale Abschnitte (14, 15) für eine Primär- und eine Sekundärspulenwicklung zu bilden, wobei der Spulenkörper mit Flanschen (16) ausgebildet ist, welche den Sekundärwicklungsabschnitt (15) in mehrere Teile teilen, wodurch eine Netzisolation sichergestellt wird, und wobei die Innenwanddicke (b) jedes Sekundärwicklungsteils mit dem Abstand von der Primärwicklung (14) zunimmt.

2. Stromversorgung nach Anspruch 1, wobei der Kern zwei E-förmige Teile (12a, 12b) aufweist, deren Mittelteile in den Spulenkörper (13) eingesetzt werden können.

3. Stromversorgung nach einem der vorangegangenen Ansprüche, wobei die Flanschen auf jeder Seite der Abschnitte (14, 15) doppelt sind.

4. Stromversorgung nach einem der vorangegangenen Ansprüche, welche weiterhin einen Leistungstransformator (9) aufweist, der mit dem Leistungswandler (6) verbunden und so angeordnet ist, dass er Spannungspegel erzeugt, welche von der Schaltungsanordnung (4) in dem LCD benötigt werden, wobei der Leistungstransformator (9) ebenfalls mit Netzisolation versehen ist.

5. Stromversorgung nach einem der vorangegangenen Ansprüche, wobei der Leistungswandlerausgang einen größeren Spannungspegel als diesen des Wechselstromeingangs aufweist.

6. Stromversorgung nach einem der vorangegangenen Ansprüche, wobei der Leistungswandlerausgang eine Spannung in dem Bereich von 200V - 600 V aufweist.

7. LCD-Einheit (1) mit einer Stromversorgung nach einem der vorangegangenen Ansprüche.

## Revendications

1. Dispositif d'alimentation en puissance pour une pluralité de dispositifs d'éclairage à contre-jour et/ou d'éclairage par le bord dans une unité d'affichage à cristaux liquides (1) comprenant:
une connexion de réseau (7),
un convertisseur de puissance (6) qui est agencé de manière à convertir une entrée de tension alternative en une sortie de tension continue,
au moins un inverseur (8) étant connecté à ladite sortie de tension continue qui est agencé de manière à transformer ladite sortie en un niveau de tension qui est adéquat pour faire fonctionner lesdits dispositifs d'éclairage (5),
**caractérisé en ce que** ledit inverseur présente une section de transformateur (11) qui comprend un noyau (12a, 12b) et une carcasse de bobine (13) constituant des compartiments coaxiaux (14, 15) pour un bobinage primaire et un bobinage secondaire, ladite carcasse de bobine étant formée avec des bourrelets (16) séparant le compartiment (15) de l'enroulement secondaire en plusieurs sections, de ce fait assurant un isolement du réseau, et où l'épaisseur de paroi intérieure (b) de chaque section d'enroulement secondaire augmente avec la distance à partir de l'enroulement primaire (14).

2. Dispositif d'alimentation en puissance selon la revendication 1, dans lequel le noyau comprend deux parties en E (12a, 12b) dont les jambes centrales sont adaptées de manière à être insérées dans la carcasse de bobine (13).

3. Dispositif d'alimentation en puissance selon l'une quelconque des revendications précédentes 1 à 2, dans lequel les bourrelets de chaque côté des compartiments (14, 15) sont doubles.

4. Dispositif d'alimentation en puissance selon l'une quelconque des revendications précédentes 1 à 3, comprenant encore un transformateur de puissance (9) qui est connecté audit convertisseur de puissance (6) et qui est agencé de manière à générer des niveaux de tension qui sont requis par des circuits (4) dans le dispositif d'affichage à cristaux liquides, ledit transformateur de puissance (9) étant également pourvu d'un isolement du réseau.

5. Dispositif d'alimentation en puissance selon l'une quelconque des revendications précédentes 1 à 4, dans lequel ladite sortie du convertisseur de puissance présente un niveau de tension étant supérieur au niveau de tension de l'entrée de tension alternative.

6. Dispositif d'alimentation en puissance selon l'une quelconque des revendications précédentes 1 à 5, dans lequel ladite sortie du convertisseur de puissance présente une tension dans la gamme comprise entre 200 V et 600 V.

7. Unité d'affichage à cristaux liquides (1) comprenant un dispositif d'alimentation en puissance selon l'une quelconque des revendications précédentes 1 à 6.
